# EUROPEAN PATENT APPLICATION

(11) **EP 1 251 472 A1**
(43) Date of publication of application: **23.10.2002**
(21) Application number: 01109617.9
(22) Date of filing: 18.04.2001
(51) Int. Cl.: G08B 21/00, H04Q 7/32

(54) **Means for loss protection of a mobile terminal**

(71) Applicant: Sony International (Europe) GmbH, 10785 Berlin (DE)
(72) Inventor: Winkler, Gregor, Sony International (Europe) GmbH, 85609 Aschheim (DE)
(74) Representative: Körber, Martin, Dipl.-Phys.

(57) **Abstract**

The present invention relates to a mobile electronic device (1) comprising a wireless interface (2) according to the bluetooth system for establishing and maintaining a connection for sending and receiving signaling data to and from a second mobile electronic device (9), and a detecting means (3) for detecting an interrupt of a wireless connection to the second electronic device (9) and for triggering a predetermined event an interrupt is detected.

The present invention further relates to a mobile terminal (9) for a wireless telecommunication system for use with this mobile electronic device (1).

## Description

The present invention relates to a mobile electronic device comprising a wireless interface according to the bluetooth system for establishing and maintaining a connection for sending and receiving signaling data to and from a second mobile electronic device. The present invention relates further to a mobile terminal for a wireless telecommunication system for using in combination with such a mobile electronic device.

Due to the mobile and portable nature of mobile terminals for wireless telecommunication systems, e.g. mobile telephones or Personal Digital Assistants (PDA) for the Global System for Mobile Telecommunication (GSM) or Universal Mobile Telephone System (UMTS), there is a high risk of an undesired loss of the mobile terminal. The loss can happen e.g. by theft or by leaving or forgetting the mobile terminal at home or in the office by the user. This is also true for every kind of portable electronic device, which is carried with by a user, like an electronic organizer or a laptop.

To protect mobile terminals against theft, these devices are usually provided with password or PIN- (Personal Identification Number-) protection. That means, that e.g. the mobile terminal can only be used after inputting a correct PIN. Thus, e.g. the SIM (Subscriber Identification Module) of a mobile terminal and/or the mobile terminal itself is protected against an unauthorized access. However, exchanging the SIM card in a stolen mobile terminal with a valid SIM card renders the device functional again so that an effective protection is not achieved.

A further solution to protect mobile terminals against theft/loss is realized by checking the IMEI (International Mobile Equipment Identify) of the mobile terminal by an access node of the wireless telecommunication system. Thereby, the IMEI of a mobile terminal, which tries to access the telecommunication network, is checked against a black list of stolen mobile terminals; if this mobile terminal is stolen, the access of the terminal to the network is denied.

However, the described solutions have the disadvantage that it is usually not recognized at once by the owner/user, if the mobile terminal is stolen. Thus, it is quite difficult for a user to get back a stolen mobile telephone.

Also, in the prior art no solution is known to protect a mobile terminal or an other mobile electronic device against an undesigned loss caused by forgetting or leaving the mobile terminal.

It is therefore the objet of the present invention to provide a mobile electronic device and a mobile terminal for a wireless telecommunication system, which provides a simple but effective protection against an undesired loss.

The above object is achieved by a mobile electronic device according to claim 1 and a mobile terminal for a wireless telecommunication system for using in combination with such a mobile electronic device according to claim 11.

The mobile electronic device according to the present invention detects the presence of a second mobile electronic device over a wireless interface with a short transmission range. If the second mobile electronic device leaves the transmission range of the wireless interface, the mobile electronic device triggers at least one predetermined event to inform the user.

Therefore, the mobile electronic device according to the present invention comprises a wireless interface according to the bluetooth system for establishing and maintaining a connection for sending and receiving signaling data to and from a second mobile electronic device, and a detecting means for detecting an interrupt of a wireless connection to the second electronic device and for triggering a predetermined event if an interrupt is detected.

The mobile electronic device according to the present invention can be e.g. implemented in a watch, pen, jewelry or also an organizer, laptop or the like. The detected second electronic device is advantageously a mobile terminal for a wireless telecommunication system, which is thus protected against an undesired loss. However, the second electronic device can also be any kind of the above mentioned electronic devices.

The present invention also relates to a mobile terminal for a wireless telecommunication system, which is used as the second electronic device, for use with a mobile electronic device as described above, which comprises a wireless interface according to the bluetooth system for establishing and maintaining a connection for sending and receiving signaling data to and from other mobile electronic devices.

The present invention has the advantage that a user recognizes immediately, if his second mobile electronic device is lost or left behind. Thus, he can immediately react to the loss e.g. by going back to the office to get the second electronic device or by calling his service provider to announce his mobile terminal as stolen.

The predetermined event, which is triggered by the detecting means, can be any kind of an alarm signal. This could be an acoustic alarm signal output by a loudspeaker, a vibration signal output by a vibration means, a message output by a display, a light signal output by a lighting means (e.g. light emitting diode or lamp), or the like.

Further advantageously, the detecting means triggers a switching means for deactivating the mobile electronic device fully or partially. That means, that the electronic device e.g. is switched off automatically or at least parts (e.g. the keypad) of the electronic device are automatically deactivated. Thus, the electronic device is itself protected against theft and an unauthorized access, respectively, since the electronic device can not be accessed by an unauthorized person.

For carrying out the present invention, the detecting means advantageously detects a maintained connection on the basis of periodically received signaling data from the second electronic device, whereby the detecting means detects an interrupt of a connection on failing to receive the signaling data for, e.g. a predetermined time.

The detecting means can also detect a maintained connection on sending signaling data to the second electronic device and receiving response signaling data, whereby the detecting means detects an interrupt of a connection on failing to receive the response signaling data.

The triggered event could depend on the actual operating mode of the second electronic device. E.g. a mobile terminal (second electronic device) is not recognized as stolen by the electronic device when leaving during a telephone call. In this operating mode, the alarm output by an outputting means could be a "silent" alarm, like vibration or a silent acoustic signal. On the other hand, leaving the connection to the mobile terminal while it is in standby/key-lock mode causes an "loud" acoustic alarm associated with automatically switching off the mobile telephone.

The electronic device according to the present invention can for example be a mobile telephone for a wireless telecommunication system, whereby the wireless interface is different from and has a shorter transmission range than said wireless telecommunication system.

It is not necessary to implement the functionality of the detecting means in the second electronic device, but it can comprise the same or partially the same functionality characteristics of the detection means of the mobile electronic device.

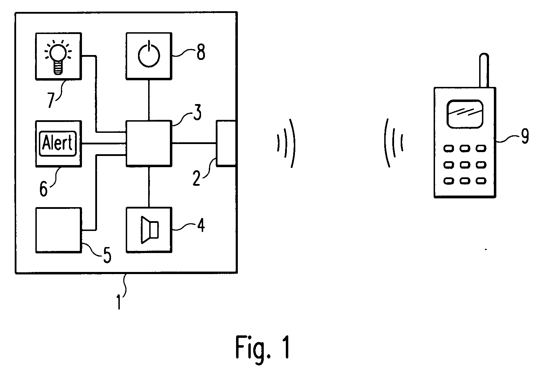

In the following description, a preferred embodiment of the present invention is explained in more detail with reference to the enclosed single drawing, in which figure 1 shows a schematic block diagram of the mobile electronic device of the present invention.

Figure 1 shows an embodiment of the present invention, whereby the mobile electronic device 1 according to the present invention (further called first electronic device 1) maintains a wireless connection to a mobile telephone 9 (second electronic device 9). Both electronic devices are communicating with each other over a wireless interface according to the bluetooth technology.

The Bluetooth technology enables a wireless transmission over a short transmission range, usually about 10-100 meters. This technology is e.g. available on chips comprising two-way transmitter/receivers, and communicating with each other by means of radio waves. The power level can be varied advantageously for high power bluetooth devices when activating the theft protection such that the range is limited to e.g. 10 meter.

The first electronic device 1 according to the present invention may advantageously be implemented in a mobile device, which is easy to carry by a user, like a watch, a jewellery, a pen or a head-set. The first electronic device 1 can also be implemented in a mobile device, which is permanently used by the user, like an electronic organizer or a laptop.

For carrying out the present invention, the first electronic device 1 comprises a wireless interface 2 for establishing and maintaining a connection for sending and receiving signaling data to and from the second mobile electronic device 9 within a short transmission range and a detecting means 3 for detecting, if the wireless connection to the second electronic device 9 is interrupted or still maintained.

If the wireless connection between the first electronic device 1 and the second electronic device 9 is interrupted, the detecting means 3 triggers one or more predetermined events. Therefore, the first electronic device 1 comprises additionally a loudspeaker 4, a vibration means 5, a display means 6, a lighting means 7 and/or a switching means 8.

Thus, on interrupting the wireless connection caused by leaving or theft of the second electronic device 9, the user is informed about this matter of fact by the first electronic device 1 by means of an acoustic, visual and/or vibration alarm signal. Further or instead of, the first electronic device 1 can automatically be disabled, e.g. by switching off the second electronic device 9, activating screenlock, activating SIM-lock, requesting the entry of the PIN, or the like. Thus, the electronic device 1 is protected against an unauthorized access, e.g. in the case of theft.

In the example shown in figure 1, the second electronic device 9 is a mobile telephone. However, it can also be any other mobile device as mentioned above.

The second electronic device 9 has to comprise as minimum requirement a wireless interface (bluetooth interface, not shown) corresponding to the wireless interface 2 of the first electronic device 1. Thus, the first electronic device 1 is enabled to detect the presence of the second electronic device 9. Optionally, the second electronic device 9 can also comprise means like the first electronic device 1 for carrying out at least parts of the functionality like the first electronic device 1. Thus, the protection against an undesired loss of any kind of mobile device can work at both ways. E.g., when the first electronic device is a mobile telephone carried in a jacket, second electronic device an organizer carried in a back-pack. If the back-pack is left behind or stolen, the mobile telephone would recognize the lost connection to the organizer and vice versa.

The event, which is triggered upon a lost connection, can be made dependent on the actual function, which is carried out by the respective electronic device. E.g., if the mobile telephone 9 leaves the transmission range during a telephone call, since the user goes some steps away, the first electronic device 1 would recognize the leaving of the mobile telephone 9 not as an undesired loss which does not result in an alarm signal. In opposite thereto, leaving the mobile telephone e.g. in a charging station during charging the battery could trigger an alarm. Thereby, e.g. leaving the mobile telephone during charging the batteries could cause a vibration alarm, while leaving the mobile telephone while it is in standby/key-lock mode could cause an acoustic alarm associated with automatically switching off the mobile telephone 9.

The theft or loss protection according to the present invention can be enabled/disabled by the user of the electronic devices, e.g. by activating/deactivating a respective menu option, whereby this menu option is advantageously protected by a code-number. To increase the protection, this menu option can only be activated, if both electronic devices are present, i.e. within the communication range.

The activation of the theft protection for both devices can be done advantageously just by one of them. So, the user can choose the device which offers the better Man-Machine interface.

In order to avoid, that the loss protection is overcome, the present invention should be implemented in such a way that the protection can not be disabled by a generic bluetooth device of the same kind. This could be done by encrypting the communication or by using a bluetooth specific ID-(Identification-) number of every bluetooth device.

## Claims

1. Mobile electronic device (1) comprising
a wireless interface (2) according to the bluetooth system for establishing and maintaining a connection for sending and receiving signaling data to and from a second mobile electronic device (9), and
a detecting means (3) for detecting an interrupt of a wireless connection to the second electronic device (9) and for triggering a predetermined event if an interrupt is detected.

2. Mobile electronic device (1) according to claim 1,
**characterized in**
**that** the detecting means (3) triggers a loudspeaker (4) for outputting an acoustic alarm signal.

3. Mobile electronic device (1) according to claim 1 or 2,
**characterized in**
**that** the detecting means (3) triggers a vibration means (5) for outputting a vibration signal.

4. Mobile electronic device (1) according to claim 1, 2 or 3,
**characterized in**
**that** the detecting means (3) triggers a display means (6) for displaying a message.

5. Mobile electronic device (1) according to one of the claims 1 to 4,
**characterized in**
**that** the detecting means (3) triggers a lighting means (7) for outputting a light signal.

6. Mobile electronic device (1) according to one of the claims 1 to 5,
**characterized in**
**that** the detecting means (3) triggers a switching means (8) for deactivating the mobile electronic device (1) partially or fully.

7. Mobile electronic (1) device according to one of the claims 1 to 6,
**characterized in**
**that** the detecting means (3) detects a maintained connection on the basis of periodically receiving signaling data from the second electronic device (9), whereby the detecting means (3) detects an interrupt of a connection on failing to receive the signaling data for a predetermined time.

8. Mobile electronic device (1) according to one of the claims 1 to 7,
**characterized in**
**that** the detecting means (3) detects a maintained connection on sending signaling data to the second electronic device (9) and receiving response signaling data, whereby the detecting means (3) detects an interrupt of a connection on failing to receive the response signaling data.

9. Mobile electronic device (1) according to one of the claims 1 to 8,
**characterized in**
**that** the triggered event depends on the actual operating mode of the second electronic device (9).

10. Mobile electronic device (1) according to one of the claims 1 to 9,
**characterized in**
**that** the mobile electronic device (1) is a mobile terminal for a wireless telecommunication system, whereby the wireless interface (2) is different from and has a shorter transmission range than said wireless telecommunication system.

11. Mobile terminal (9) for a wireless telecommunication system for use with a mobile electronic device (1) according to one of the preceding claims, comprising
a wireless interface (2) according to the bluetooth system for establishing and maintaining a connection for sending and receiving signaling data to and from other mobile electronic devices.
